# EUROPÄISCHE PATENTSCHRIFT

(11) **EP 0 615 807 B1**
(45) Veröffentlichungstag und Bekanntmachung des Hinweises auf die Patenterteilung: **08.04.1998**
(21) Anmeldenummer: 93119673.7
(22) Anmeldetag: 07.12.1993
(51) Int. Cl.: B23D 45/06, B23D 47/02, B23D 59/00, B27G 19/02

(54) **Präzisionstischkreissäge mit erhöhter Verwindungssteifigkeit der Strukturelemente**
Precision table saw with increased torsion stiffness of structural elements
Scie de précision à table ayant une rigidité de torsion améliorée des éléments de structure

(30) Priorität: 24.12.1992 DE 4244149
(43) Veröffentlichungstag der Anmeldung: 21.09.1994
(73) Patentinhaber: Elektra Beckum Aktiengesellschaft, D-49716 Meppen (DE)
(72) Erfinder: Hempelmann, Gerd, 49716 Meppen (DE); Hempelmann, Jürgen, 49716 Meppen (DE)
(74) Vertreter: von Rohr, Hans Wilhelm, Dipl.-Phys.

(56) Entgegenhaltungen:
- EP-A- 0 153 262
- EP-A- 0 224 653
- DE-A- 2 904 685
- US-A- 2 062 969
- US-A- 2 260 421
- US-A- 2 703 115
- US-A- 2 956 597
- US-A- 3 463 205
- US-A- 3 721 141
- US-A- 4 819 402

## Beschreibung

Die Erfindung betrifft eine Tischkreissäge mit den Merkmalen des Oberbegriffs von Anspruch 1, also eine sogenannte Unterflur-Zugkreissäge.

Eine solche Unterflur-Zugkreissäge die sehr vielfältig einsetzbar ist (DE - A - 29 04 685) ist seit langem bekannt und bewährt. Diese ist in der Praxis weitergebildet worden und ist am Markt umfangreich präsent (Betriebsanleitung "Unterflur-Zugsäge Erika 85 L/K" der mafell Maschinenfabrik, August 1992). Bei dieser Unterflur-Zugkreissäge befinden sich die in Längsrichtung verlaufenden Führungsschienen mit Abstand von der Tischplatte unten im Außengehäuse. Das Sägeaggregat ist also an den in Längsrichtung verlaufenden Führungsschienen mittels Lagerelementen in Längsrichtung verschiebbar. Am Sägeaggregat ist ein Tragrahmen für das Kreissägeblatt vorgesehen, der gegenüber dem Antriebsmotor des Sägeaggregates schwenkbar ist und mit Abstand von der Welle des Antriebsmotors das Kreissägeblatt trägt. Beide Elemente sind mittels eines Antriebsriemens in dem wannenartig ausgeführten und durch eine Abdeckung verschlossenen Tragrahmen antriebstechnisch verbunden. Dies ist zweckmäßiger als der früher bekannte höhenverstellbare Tisch für das Sägeaggregat insgesamt.

Mit dem Tragrahmen für das Kreissägeblatt gemeinsam schwenkt mittels eines Parallellenkers ein Spaltkeil.

Das Außengehäuse besteht aus feststehenden, einen Kasten bildenden Stirnplatten und plattenartigen Seitenwangen. Im Außengehäuse ist ein von übereinander in Längsrichtung verlaufend angeordneten Führungsschienen und diese verbindenden Stirnplatten gebildeter Rahmen angeordnet. Dieser ist bezüglich der Gehrungsschnittachse zur Seite neigbar. Auch in seitlich geneigter Stellung ist das Sägeaggregat auf den Führungsschienen in Längsrichtung verschiebbar.

Am unteren Rand der Stirnplatten des Rahmens ist jeweils eine kreisbogenförmige Zahnstange vorgesehen. Mit jeder der beiden Zahnstangen kämmt ein Zahnrad. Die beiden Zahnräder sind über eine Längswelle miteinander und mit einem an einem Ende angeordneten Getriebe sowie einem Betätigungsknauf gekuppelt und im Außengehäuse gelagert. So läßt sich die Seitenneigung einstellen und mittels einer Skala ablesen.

Die Längsverschiebung des Sägeaggregates erfolgt mittels eines Zugstabes. Dieser wirkt gegen die Rückzugskraft einer den Schlitten in seine hintere Endstellung ziehenden Rückzugsfeder.

Bei der aus der Praxis bekannten Tischkreissäge ist es zweckmäßig, daß alle Bedienteile, also der Zugknauf, der Feststellknebel, der Betätigungsknauf und die Anzeigevorrichtung an ein und derselben Seite, nämlich vorn an der entsprechenden Seitenwange des Außengehäuses zu finden sind.

Die bekannte Tischkreissäge hat noch Verbesserungsmöglichkeiten hinsichtlich der Schnittpräzision. Der Lehre liegt daher die Aufgabe zugrunde, die bekannte Tischkreissäge in ihrer Schnittpräzision weiter zu verbessern.

Die zuvor aufgezeigte Aufgabe ist bei einer Tischkreissäge mit den Merkmalen des Oberbegriffs von Anspruch 1 durch die Merkmale des kennzeichnenden Teils von Anspruch 1 gelöst.

Zunächst wird die Schnittpräzision dadurch erhöht, daß die Verschiebung an den Führungsschienen von der Seitenneigung des Sägeaggregats nicht beeinflußt wird, beide Funktionen sind hier voneinander entkoppelt, da das Sägeaggregat in einem seinerseits an den Führungsschienen verschiebbaren Schlitten und im Schlitten seitenneigbar angeordnet ist. Durch die Festanordnung der Führungsschienen können diese so nahe wie möglich am Sägeschlitz, insbesondere an der Tischplatte angeordnet sein, was wiederum die Schnittpräzision erhöht.

Ein weiteres Mal wird die Schnittpräzision der Tischkreissäge dadurch erhöht, daß das Sägeaggregat zur Höhenverstellung des Kreissägeblattes insgesamt einen Tragrahmen aufweist, der an einem Lagerpunkt im Schlitten um eine in Querrichtung verlaufende Tragachse schwenkbar ist. Das Sägeaggregat insgesamt kann also mittels des Tragrahmens geschwenkt werden, nicht nur das Kreissägeblatt gegenüber dem ansonsten feststehenden Sägeaggregat (Antriebsmotor). Damit ist die Voraussetzung geschaffen, den Tragrahmen mitsamt dem daran befindlichen Sägeaggregat in Querrichtung zum Schlitten einzujustieren. Durch die Möglichkeit, den Antriebsmotor des Sägeaggregates mittels des Tragrahmens seinerseits schwenkbar zu machen, kann der Antriebsmotor weiter weg von der Tischplatte angeordnet sein, so daß er beim seitlichen Neigen des Kreissägeblattes weniger stört.

Schließlich kommt der Anordnung des Sägeaggregats an einem insgesamt im Schlitten um eine in Querrichtung verlaufende Tragachse schwenkbaren Tragrahmen insoweit besondere Bedeutung zu, als dadurch das Kreissägeblatt trotz eines relativ weit unterhalb der Tischplatte befindlichen Antriebsmotors mit einem etwa parallel zur Ebene der Tischplatte liegenden Hebelarm schwenkbar und damit höhenverstellbar ist. Diese Schwenklage des Kreissägeblattes bedingt die geringstmögliche, der Höhenverstellung überlagerte Längsverstellung des Kreissägeblattes im Sägeschlitz.

Insgesamt ist die erfindungsgemäße Tischkreissäge durch ihre Konzeption mit dem an Führungsschienen verschiebbaren Schlitten und erst darin gelagertem Sägeaggregat systematisch mit einer höheren Schnittpräzision zu betreiben als die aus dem Stand der Technik bekannte Tischkreissäge.

Die Verschiebeführung des Sägeaggregates kann mit dieser Technik so nahe wie möglich an den Sägeschlitz herangeführt werden. Insbesondere ist es möglich, in vorteilhafter Weise die Führungsschienen an der Tischplatte anzuordnen und den Schlitten hängend anzubringen.

Zweckmäßig ist die Definition der Gehrungsschnittachse nur virtuell durch kreisbogenförmige Kulissenführungen.

Ein unten herum geschlossener Späneauffangkasten, der das Kreissägeblatt nach unten umgibt und ggf. an eine Absaugeinrichtung angeschlossen ist, ist auch im Stand der Technik vorgesehen. Besonders zweckmäßig ist die vorgeschlagene Konzeption, den Späneauffangkasten seitenneigbar in den Schlitten einzuhängen und das Sägeaggregat selbst im Späneauffangkasten anzuordnen. Dabei muß der relativ groß bauende elektrische Antriebsmotor selbst nicht zwingend im Späneauffangkasten angeordnet sein, jedenfalls läßt sich das dann vermeiden, wenn das Kreissägeblatt vom Antriebsmotor getrennt und über einen Antriebsriemen antriebstechnisch gekuppelt ist.

Eine Tragachse und ein Tragrahmen für das Sägeaggregat bieten eine erfindungsgemäß erkannte Möglichkeit für eine Verstellung des Tragrahmens und damit des Kreissägeblattes in Querrichtung. Damit läßt sich das Kreissägeblatt auf einfache Weise gegenüber dem Schlitten verstellen und genau mittig im Sägeschlitz positionieren. Das ist eine wichtige Voraussetzung für hochpräzise Schnitte. Auch für eine geringfügige Winkelverstellung des Kreissägeblattes bietet die Tragachse besonders günstige Voraussetzungen für eine konstruktiv einfache Winkelverstellung. Insbesondere durch die exzentrische Verstellung nur eines Achsenendes der Tragachse (bei entsprechendem Spielraum am anderen Achsenende) läßt sich der Tragrahmen so gegenüber der Längsrichtung ausrichten, daß das Kreissägeblatt exakt in der Linie des Sägeschlitzes liegt.

Bei der erfindungsgemäßen Tischkreissäge sollte es aus Sicherheitsgründen unmöglich sein, seitlich von unten her an das Kreissägeblatt heranzukommen. Dies wird durch Schutzklappen verhindert.

Die Präzision der Sägeschnitte ist auch davon abhängig, daß sich das Außengehäuse nicht verwindet. Die Verwindungssteifigkeit des Außengehäuses einer Tischkreissäge wird durch entsprechende Verzahnungen, die ineinander greifen, optimiert.

Im folgenden wird die Erfindung anhand der Zeichnung näher erläutert. Die Zeichnung zeigt ein bevorzugtes Ausführungsbeispiel einer erfindungsgemäßen Tischkreissäge mit Unterflur-Zugfunktion. In der Zeichnung zeigt
- Fig. 1: eine perspektivische Ansicht der erfindungsgemäßen Tischkreissäge mit Untergestell,
- Fig. 2: ausschnittsweise einen Teil des "Innenlebens" der Tischkreissäge,
- Fig. 3: eine Vorderansicht der Tischkreissäge, jedoch ohne Kreissägeblatt und Auf- und Anbauten,
- Fig. 4: im Querschnitt den Bereich von Tischplatte und Unterbau nahe dem hinteren Ende des Außengehäuses,
- Fig. 5: im Längsschnitt Tischplatte und Späneauffangkasten mit Einbauten,
- Fig. 6: den Schlitten der erfindungsgemäßen Tischkreissäge in einem Querschnitt,
- Fig. 7: den Tragrahmen für Antriebsmotor und Kreissägeblatt in einer Fig. 5 entsprechenden Ansicht,
- Fig. 8: die Lagerung der Antriebswelle des Kreissägeblattes,
- Fig. 9: im Schnitt ein Ausführungsbeispiel eines Zugstabes für den Schlitten der erfindungsgemäßen Tischkreissäge.

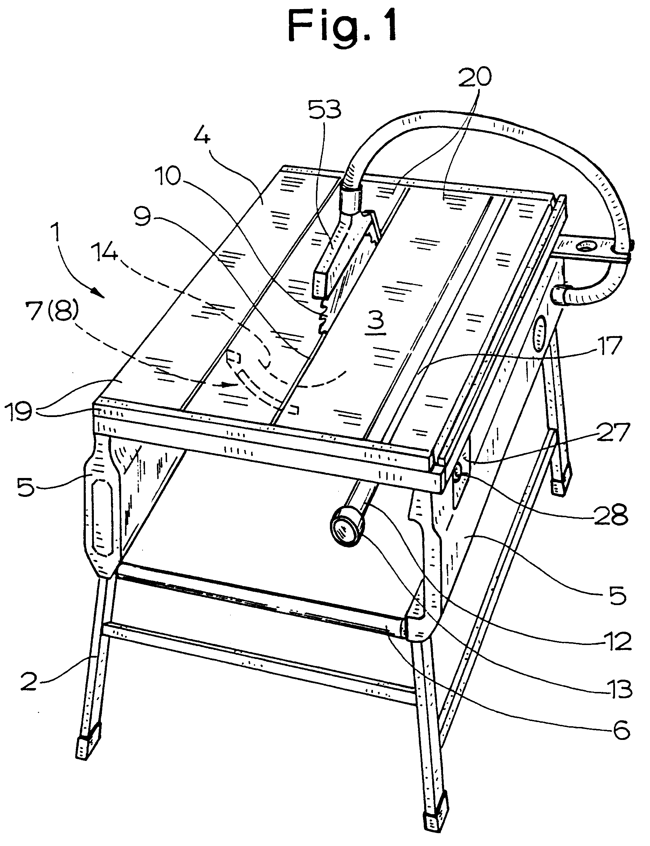

Fig. 1 zeigt an einem bevorzugten Ausführungsbeispiel zunächst in schematischer Darstellung eine Tischkreissäge mit Unterflur-Zugfunktion. Diese zeigt zunächst ein Außengehäuse 1, das auf einem vom Außengehäuse 1 trennbaren Untergestell 2 steht, das in an sich bekannter Weise zusammenfaltbar ist. Dadurch wird die gesamte Tischkreissäge leichter transportabel.

Das Außengehäuse 1 weist zunächst eine Werkstückauflagefläche 3 bildende Tischplatte 4 auf, die zusammen mit Seitenwangen 5 und mindestens zwei die Seitenwangen 5 unten verbindenden Querstangen 6 die die Verwindungssteifigkeit gewährleistenden Strukturelemente des Außengehäuses 1 bildet.

Unter der Tischplatte 4 ist im Außengehäuse 1 ein Sägeaggregat 7 angeordnet, das in Fig. 1 nur angedeutet ist und jedenfalls einen Antriebsmotor 8 und ein die Tischplatte 4 von unten her in einem Sägeschlitz 9 durchsetzendes Kreissägeblatt 10 aufweist. Im Stand der Technik ist das Kreissägeblatt 10 unmittelbar auf die Abtriebswelle des elektrischen Antriebsmotors 8 aufgeflanscht, das ist im Rahmen der Lehre der Erfindung aber nicht zwingend, worauf später noch eingegangen wird.

Wie Fig. 1 schon erkennen läßt, erstreckt sich der Sägeschlitz 9 im wesentlichen über die volle Länge der Tischplatte 4 und definiert damit die Längsrichtung der Tischkreissäge (parallel zu den Seitenwangen 5 im hier dargestellten Ausführungsbeispiel). Das Sägeaggregat 7 ist dabei an in Längsrichtung verlaufenden Führungsschienen 11 in Längsrichtung verschiebbar, und zwar betätigt durch einen Zugstab 12, vor dem in Fig. 1 in erster Linie ein Zugknauf 13 zu erkennen ist, da sich das Sägeaggregat 7 in seiner hinteren Endstellung befindet.

Durch die Längsverschiebbarkeit des Sägeaggregates 7 läßt sich das Kreissägeblatt 10 in Längsrichtung im Sägeschlitz 9 bewegen, daher kommt die Bezeichnung Unterflur-Zugkreissäge, also Zugkreissäge mit unter der Tischplatte 4 angeordnetem Antriebsmotor im Gegensatz zu auch bekannten Zugkreissägen mit hängend angeordnetem Sägeaggregat.

Gestrichelt ist in Fig. 1 nun noch angedeutet, daß mit der dergestellten Tischkreissäge auch Gehrungsschnitte und Doppel-Gehrungsschnitte (Schifterschnitte) ausgeführt werden können, da nämlich das Sägeaggregat 7 auch bzgl. einer in Längsrichtung verlaufenden und etwa in der Ebene der Werkstückauflagefläche 3 im Sägeschlitz 9 liegenden Gehrungsschnittachse seitenneigbar ist, die üblicherweise und auch im Stand der Technik sowie hier bei der Lehre der Erfindung durch kreisbogenförmige Kulissenführungen 14 virtuell definiert wird. Im Stand der Technik wie bei der Erfindung ist aus technischen Gründen die Seitenneigung auf 45° gegenüber der senkrechten Position des Kreissägeblattes 10 begrenzt, das reicht für alle üblichen Schnitte aus und erlaubt gleichzeitig die Nutzung des gegenüber dieser Neigungszone liegenden Bereichs unter der Tischplatte 4 für eingebaute Teile der Tischkreissäge.

In einer Zusammenschau der Fig. 1, 2, 3 und 4 ergibt sich nun zunächst, daß die Führungschienen 11 am Außengehäuse 1 fest angebracht sind, daß das Sägeaggregat 7 in einem an den Führungsschienen 11 verschiebbaren Schlitten 15 und im Schlitten 15 um die Gehrungsschnittachse seitenneigbar angeordnet ist. Auch hier sei der Ordnung halber darauf hingewiesen, daß der Begriff des Schlittens allgemein zu verstehen ist und auch Wagen und andere Tragelemente umfaßt.

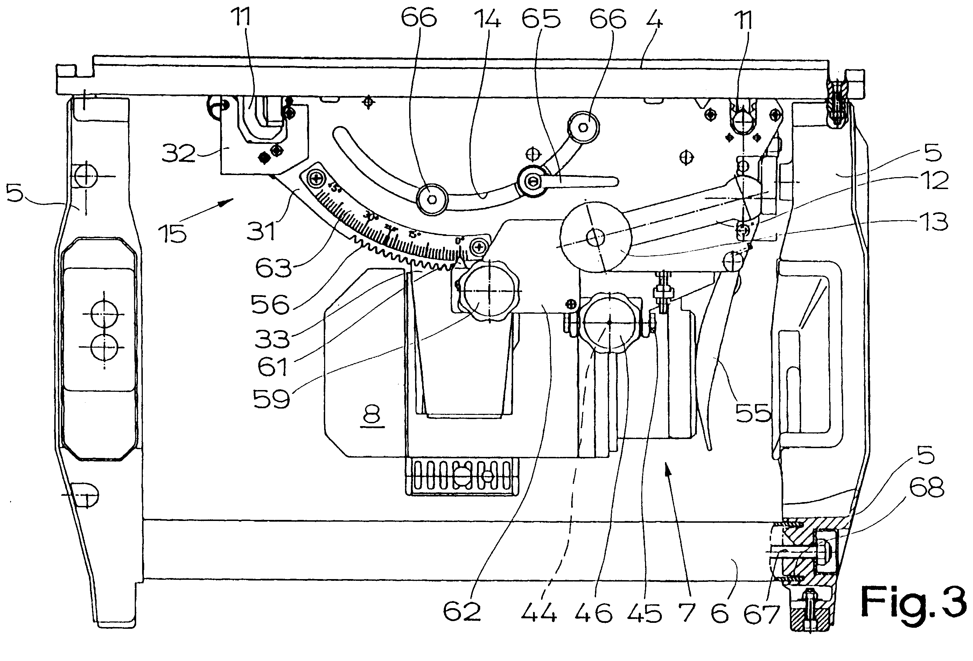

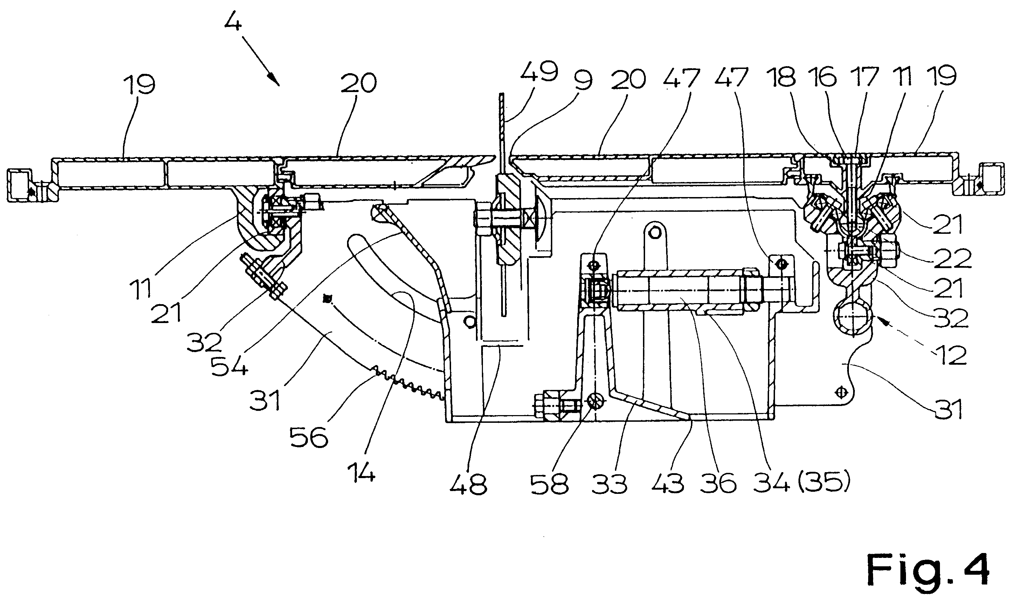

Die Ansicht in Fig. 3 und der Querschnitt in Fig. 4 machen weiter deutlich, daß nach bevorzugter Lehre die Führungsschienen 11 an der Tischplatte 4 angeordnet sind, der Schlitten 15 also gewissermaßen hängend angebracht ist.

Damit ist die Führungsfunktion, wie im allgemeinen Teil der Beschreibung erläutert, so nah wie möglich an den Schnittbereich des Kreissägeblattes 10 im Sägeschlitz 9 herangerückt werden, was die Führungspräzision deutlich erhöht.

Für die Befestigung der Führungsschienen 11 an der Tischplatte gibt es verschiedene Möglichkeiten. Eine erste Alternative zeigt die in Fig. 4 rechts dargestellte Führungsschiene 11, die nämlich durch von oben her die Tischplatte 4 durchsetzende Schrauben 16 an der Tischplatte 4 befestigt ist. Die Köpfe der Schrauben 16 sind in der Tischplatte 4 versenkt, und zwar hier nicht mit einem üblicher Senkkopf, sondern dadurch, daß sie in einer von einer bündig abschließenden Abdeckung 17 insbesondere aus Kunststoff abgedeckten Vertiefung 18 in der Tischplatte 4 angeordnet sind. Die rechts dargestellte Führungsschiene 11 erstreckt sich über die erforderliche Länge, insbesondere die volle Länge der Tischplatte 4.

Eine Alternativlösung für die Anbringung der Führungsschiene 11 zeigt Fig. 4 links dergestalt, daß nämlich die Führungsschiere 11 an der Tischplatte 4 integral angeformt ist. Das kann bei einer als Gußstück ausgeführten Tischplatte 4 realisiert werden, gewinnt aber seine besondere Bedeutung dadurch, daß im dargestellten Ausführungsbeispiel und nach bevorzugter Lehre die Tischplatte 4 aus einem bzw. hier aus mehreren Extrusionsprofilen, insbesondere aus Aluminium besteht und die Führungsschiene 11 Teil des Extrusionsprofils ist. Fig. 1 in Verbindung mit Fig. 4 macht dabei sehr deutlich, daß die Tischplatte 4 aus einem Außenrahmen 19, feststehend, und zwei den Sägeschlitz 9 beidseits begrenzenden Einlegeplatten 20 besteht, sowohl die den Außenrahmen 19 bildenden Teile als auch die Einlegeplatten 20 als Aluminium-Extrusionsprofile ausgeführt. Die Einlegeplatten 20 schaffen eine hervorragende Zugänglichkeit des nach unten aus Sicherheitsgründen weitgehend abgshlossenen Bereiches mit dem Sägeaggregat 7 von oben her zu Reinigungs-/Reparaturzwecken.

Ungeachtet dessen, daß die Führungsschienen 11 wegen der gleichbleibenden Lage des Schlittens 15 dazu optimal gestaltet werden können, sind sie hier nochmals besonders präzisionsgerecht ausgestaltet, nämlich dadurch, daß die insbesondere als Lagerrollen ausgeführten Lagerelemente 21 des Schlittens 15 an einer Führungsschiene 11 wirkungsmäßig in allen Richtungen angreifen, jedoch an der anderen Führungsschiene 11 in Querrichtung nicht angreifen. Letztere Führungsschiene 11 ist in Fig. 3 und 4 links dargestellt, erstere Führungsschiene 11 befindet sich rechts. Man erkennt dort drei im Winkel von 120° gegeneinander versetzt angeordneten Lagerrollen als Lagerelemente 21. Man könnte den im Querschnitt kreisförmigen unteren Kopf 22 dieser Führungsschiene 11 im Prinzip mit der Führungsschiene 11 gemeinsam auch durch Extrusion herstellen. Die gewünschte Präzision der Lagerung mittels der Lagerelemente 21 macht aber eine separate Ausbildung des unteren Kopfes 22 empfehlenswert, was gleichzeitig auch für die Materialauswahl einen Freiraum schafft. Daraus resultiert dann aber die Notwendigkeit, wie dargestellt, diesen unteren Kopf 22 der Führungsschiene 11 mittels der dargestellten Schrauben 16 an der Tischplatte 4 zu befestigen. Dargestellt sind schließlich Schleif- und Abdichtstreifen.

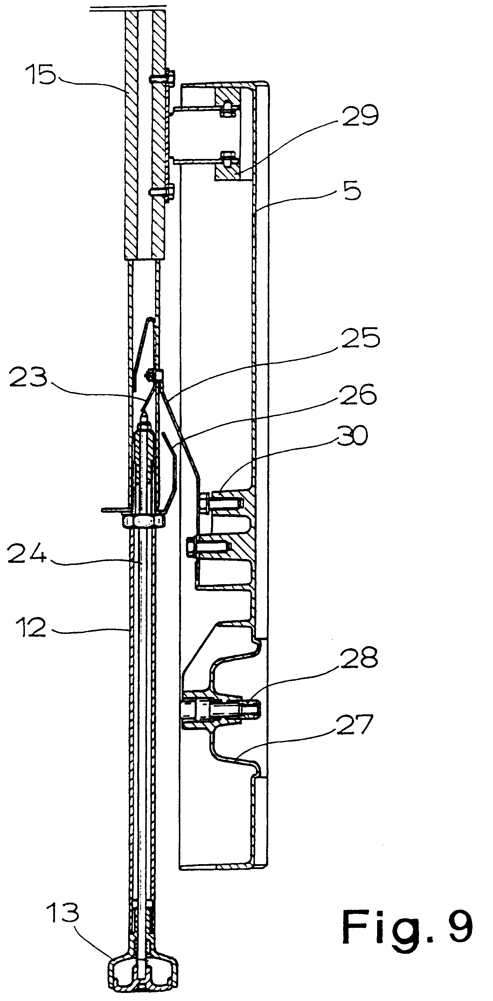

Zuvor ist schon darauf hingewiesen worden, daß der Schlitten 15 mittels eines daran angebrachten Zugstabes 12 mit Zugknauf 13 in Längsrichtung verschiebbar ist. Die genauere Konstruktion des Zugstabes 12 ist aus Fig. 9 ersichtlich, wo rechts eine Seitenwange 5 des Außengehäuses 1 im Schnitt dargestellt ist. Fig. 9 unterscheidet sich aber insoweit von Fig. 1 und 3 als der Zugstab 12 hier gerade ist, während er in Fig. 1 und 3 abgewinkelt ist, um die Handhabbarkeit seitlich der Seitenwange 5 zu verbessern. Schon im Stand der Technik ist es so, daß der Schlitten 15 mittels des Zugstabes 12 gegen die Rückzugskraft einer den Schlitten 15 in seine hintere Endstellung ziehenden Rückzugsfeder verschiebbar ist. Aus Sicherheitsgründen ist der Schlitten 15 in seiner hinteren Endstellung gegenüber dem Außengehäuse 1 arretierbar. Gleiches gilt in einer bestimmten Verschiebestellung, nämlich der Kreissägestellung mit etwa in der Mitte der Tischplatte 4 stehendem Kreissägeblatt 10. Die Konstruktion des Zugstabes 12 ist dabei deshalb besonders einfach, weil hier der Zugstab 12 eine innenliegende Riegelfeder 23 und einen innenliegenden, vom Zugknauf 13 her durch Druck verschiebbaren, die Riegelfeder 23 aus lösenden Betätigungsstab 24 aufweist. Mittels der Riegelfeder 23 und eines Zugeordneten Riegelelementes 25 am Außengehäuse 1, nämlich an der Seitenwange 5 ist der Zugstab 12 in der hinteren Endstellung verriegelbar. Die Riegelfeder 23 könnte in einer Zweitfunktion, wie im Stand der Technik, auch für die Arretierung in der Kreissägestellung dienen. Das ist hier aber nicht der Fall, vielmehr ist am Zugstab 12 seitlich ein weiteres Riegelelement 26 angebracht, das in sich federnd ist, jedoch normalerweise mit keinem Teil am Außengehäuse 1 in Berührung kommt. Am Außengehäuse 1, nämlich in der Seitenwange 5, befindet sich in einer Aufnahmefassung 27 ein Drehknauf 28, der nach innen, in Fig. 9 nach links, gedrückt und in dieser gedrückten Position verriegelt werden kann. Dann kann man den Schlitten 15 mittels des Zugstabes 12 einfach nach vorn, in Fig. 9 nach unten ziehen, bis das weitere Riegelelement 26 auf die Spitze des Drehknaufs 28 aufschnappt und den Schlitten 15 samt Sägeaggregat in der Kreissägestellung arretiert. Ist der Drehknauf 28 zurückgezogen, wie in Fig. 9 dargestellt, so kann man den Schlitten 15 mit dem Sägeaggregat 7 solange nach vorne ziehen bis ein Anschlagelement 29 am Zugstab 12 bzw. am Schlitten 15 an einem Gegenanschlag 30 in der Seitenwange 5 anschlägt (in Fig. 9 ist das erste Riegelelement 25 in einer anderen Ebene angeordnet als das Anschlagelement 29, dieses fährt darüber gegen den Gegenanschlag 30). Im übrigen könnten die Anschlagelemente auch am Schlitten mittig angeordnet sein. Dann ergibt sich ein längerer Zugweg, den man mit längeren Stangen/Profilen ausnutzen kann.

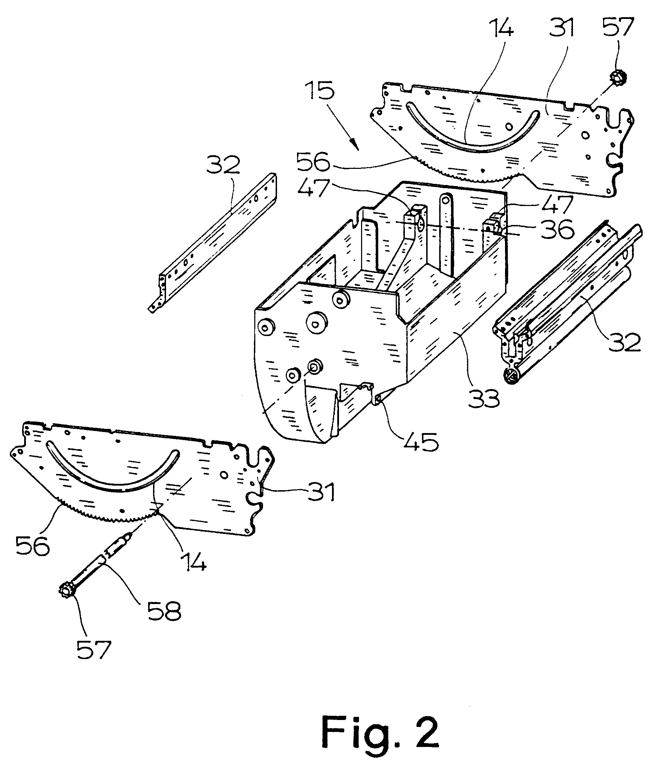

Zurückkehrend zu den Darstellungen in den Fig. 2, 3 und 4 sowie 6 läßt sich feststellen, daß im dargestellten Ausführungsbeispiel der Schlitten 15 aus Stirnplatten 31 und diese verbindenden, die Lagerelemente 21 tragenden Verbindungsstreben 32 besteht.

Die Verbindungsstreben 32 sind wiederum als Aluminium-Extrusionsprofile ausgeführt, (im dargetellten, bevorzugten Ausführungsbeispiel). Wie die Figuren weiter deutlich machen, weisen die Stirnplatten 31 des Schlittens 15 die kreisbogenförmigen Kulissenführungen 14 für die Seitenneigung des Sägeaggregates 7 auf.

Der Schlitten 15 könnte als unten herum geschlossener Späneauffangkasten ausgeführt sein. Im dargestellten und insoweit bevorzugten Ausführungsbeispiel (besonders gut zu sehen in Fig. 2) gilt aber, daß in den Schlitten 15 bzgl. der Gehrungsschnittachse neigbar, insbesondere in den Kulissenführungen 14, ein Späneauffangkasten 33 eingehängt und das Sägeaggregat 7 im Späneauffangkasten 33 angeordnet ist. Die Erläuterung, daß das Sägeaggregat 7 im Späneauffangkasten 33 "angeordnet" ist, ist allerdings nicht im engsten Sinne zu verstehen, denn wie Fig. 3 besonders zeigt, ist der Antriebsmotor 8 im dargestellter Ausführungsbeispiel tatsächlich unterhalb des Späneauffangkastens 33 angeordnet, was in seiner Wirkung später noch erläutert wird.

In Fig. 4 erkennt man im übrigen an beiden Rändern rechts und links recht gut die Verbindungsstreben 32 in ihrer Ausführung als Aluminium-Extrusionsprofile. An der rechts dargestellten Verbindungsstrebe 32 erkennt man unten mit kreisförmigem Querschnitt die Aufnahmefassung des Zugstabes 12.

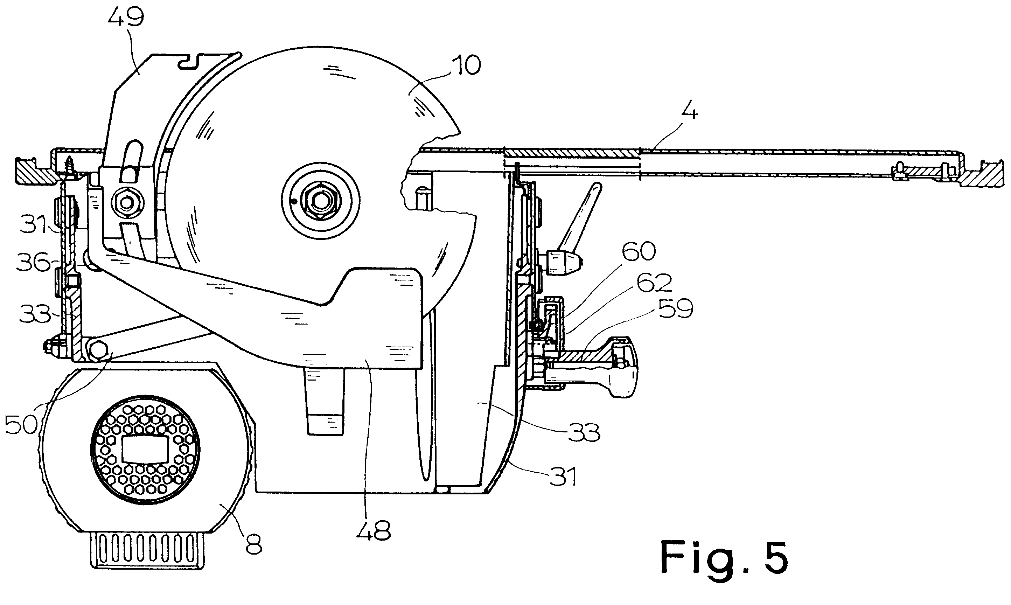

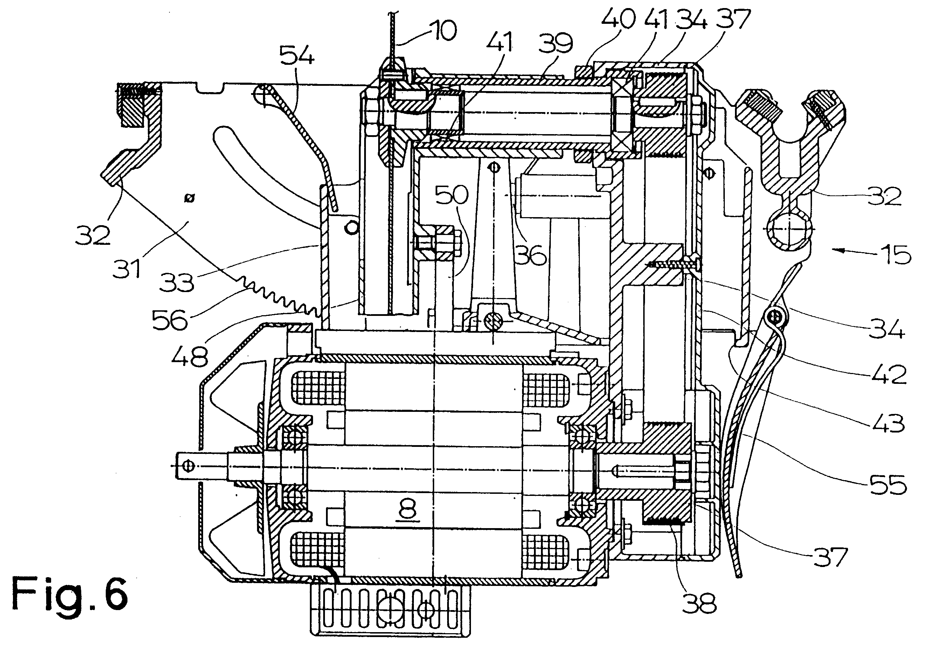

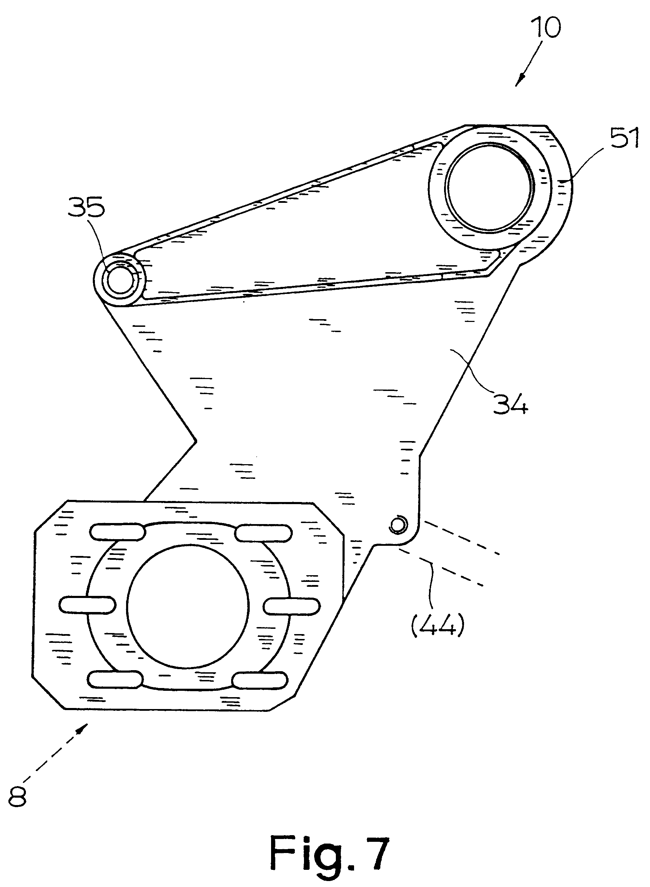

Zum Stand der Technik ist ausführlich erläutert worden, daß das Sägeaggregat 7 höhenverstellbar ist, um die Schnittiefe des Kreissägeblattes 10 einstellen zu können. Es ist auch ausführlich erläutert worden, welche verschiedenen Möglichkeiten dort für die Höhenverstellung offenbart sind. Im dargestellten Ausführungsbeispiel gilt nun, daß das Sägeaggregat 7 höhenverstellbar ist und dazu einen Tragrahmen 34 aufweist, der an einem Lagerpunkt 35 um eine in Querrichtung verlaufende Tragachse 36 schwenkbar ist. Dies ist besonders gut zu erläutern anhand der Fig. 2, 6 und 7, aber auch im Rückgriff auf Fig. 4. In Fig. 4 erkennt man dabei nur das äußerste Ende des Tragrahmens 34 im Schnitt, nämlich gerade den Lagerpunkt 35 mit dem die Tragachse 36 umfaßt wird. Fig. 6 und 7, aber auch Fig. 5 lassen im Zusammenhang erkennen, daß im dargestellten und insoweit bevorzugten Ausführungsbeispiel der Antriebsmotor 8 und das Kreissägeblatt 10 am Tragrahmen 34 mit Abstand voneinander angebracht und mittels eines Antriebsriemens oder dergleichen miteinander antriebstechnisch gekoppelt sind. In Fig. 7 erkennt man den Tragrahmen 34 ohne alle weiteren Teile mit den Anbringungsbereichen für den Antriebsmotor 8 (gestrichelter Pfeil) und das Kreissägeblatt 10 (durchgezogener Pfeil) und versetzt dazu dem Lagerpunkt 35. In Fig. 6 erkennt man seitlich die Riemenrollen 37 und unten angedeutet einer Riemen 38. Man erkennt ferner, daß das Kreissägeblatt 10 am Tragrahmen 34 drehbar gelagert ist, und zwar in einem Lagerstutzen 39, der am Tragrahmen 34 mit einer Kontermutter 40 verspannt ist und im inneren Drehlager 41 für die Antriebswelle des Kreissägeblattes 10 aufweist.

Ferner zeigt Fig. 6 gut, daß der Tragrahmen 34 im dargestellten Ausführungsbeispiel auf der Seite des Antriebsriehmens bzw. der Riemenrollen 37 wannenartig ausgeführt und, hier dargestellt, mit einer Abdeckung 42 verschlossen ist.

Betrachtet man Fig. 4 in Verbindung mit Fig. 6, so erkennt man auch, daß dieser Bereich des Späneauffangkastens 33 im Bereich des Antriebsmotors 8 von dem Tragrahmen 34 in einer Öffnung 43 durchsetzt ist.

Fig. 2, 3 und 7 zeigen weiter, daß eine - vom Zugstab 12 unabhängige - Verstellspindel 44 oder dgl. am Tragrahmen 34 mit Abstand vom Lagerpunkt 35 angreift und am anderer Ende in einem Spindelwiderlager 45 am Schlitten 15, insbesondere am Späneauffangkasten 33, gelagert ist. Man erkennt in Fig. 7 den Angriffspunkt am Tragrahmen 34 und in Fig. 3 besonders gut das Spindelwiderlager 45 hier am in Fig. 2 rechts unten erkennbaren Anschlußbereich des Späneauffangkastens 33. Man erkennt auch das Ende der Verstellspindel 44 mit dem dortigen Drehknauf 46.

In Fig. 2 ist angedeutet, wo dort die Tragachse 36 für den Tragrahmen 34 anzuordnen ist. Die Tragachse 36 ist auch in Fig. 5 angedeutet, in Fig. 6 identifiziert und im Detail dann in Fig. 4 gezeigt. Mit der letzteren Darstellung befassen wir uns nunmehr.

Zunächst gilt, daß die Tragachse 36 des Tragrahmens 34 mit den Achsenden am Schlitten 15, insbesondere im Späneauffangkasten 33, befestigt/gelagert ist und daß die Tragachse 36 mit dem Tragrahmen 34 bzw. der Tragrahmen 34 auf der Tragachse 36 in Achsrichtung - Querrichtung - zumindest geringfügig verstellbar ist. Das ist im allgemeinen Teil der Beschreibung hinsichtlich seiner Funktion schon erläutert worden, es ist eine Funktion, die auch bei einer Konstruktion der Tischkreissäge wie im Stand der Technik vorteilhaft wäre. Weiter gibt die Tragachse 36 die Möglichkeit, daß die Tragachse 36 gegenüber der Querrichtung geringfügig winkelverstellbar ist, daß dazu ein Achsende quer zur Achsrichtung verstellbar ist und daß dazu wiederumeine exzentrisch verstellbare Lagerung vorgesehen ist.

In Fig. 4 erkennt man links die zuvor erläuterte exzentrische Lagerung des Achsenendes der Tragachse 36, versehen mit einer Innen-Sechskantschraube. Einerseits kann die Tragachse 36 selbst durch Drehung um ihre Längsachse gegenüber den Befestigungsstellen am Späneauffangkasten 33 - Befestigungsstellen 47 in Fig. 2 - in Querrichtung verschoben werden, andererseits kann durch Drehung der Innen-Sechskantschraube links in der Lagerung des Achsendes der Tragachse 36 in Fig. 4 die Tragachse 36 insgesamt etwas "verkantet" werden. Jeder Bewegung der Tragachse 36 folgt der darauf gelagerte Tragrahmen 34, daran ist das Kreissägeblatt 10 drehbar, ansonsten aber lagefest angebracht. Die Ausrichtung des Kreissägeblattes 10 (Fig. 6) im Sägeschlitz 9 kann also sowohl seitlich in Querrichtung als auch hinsichtlich der Winkelstellung perfekt eingestellt werden. Diese Einstellung erfolgt von oben, also von der Tischplatte 4 her, was wiederum die Bedeutung der Einlegeplatten 20 seitlich des Sägeschlitzes 9 hervorhebt.

Die Fig. 4, 5 und 6 sowie 8 machen deutlich, daß im dargestellten Ausführungsbeispiel eine weitere Ausgestaltungsform gilt, nämlich diejenige, daß dem Kreissägeblatt 10 eine untere Schutzhaube 48 und ein daran angebrachter Spaltkeil 49 zugeordnet ist und daß die Schutzhaube 48 einerseits am Tragrahmen 34 um die Antriebswelle des Kreissägeblattes 10 drehgelagert, andererseits über einen Parallellenker 50 mit dem Schlitten 15, insbesondere dem Späneauffangkasten 33 verbunden ist. Diese Konzeption ist ganz allgemein bei einer Tischkreissäge interessant und für sich erfinderisch.

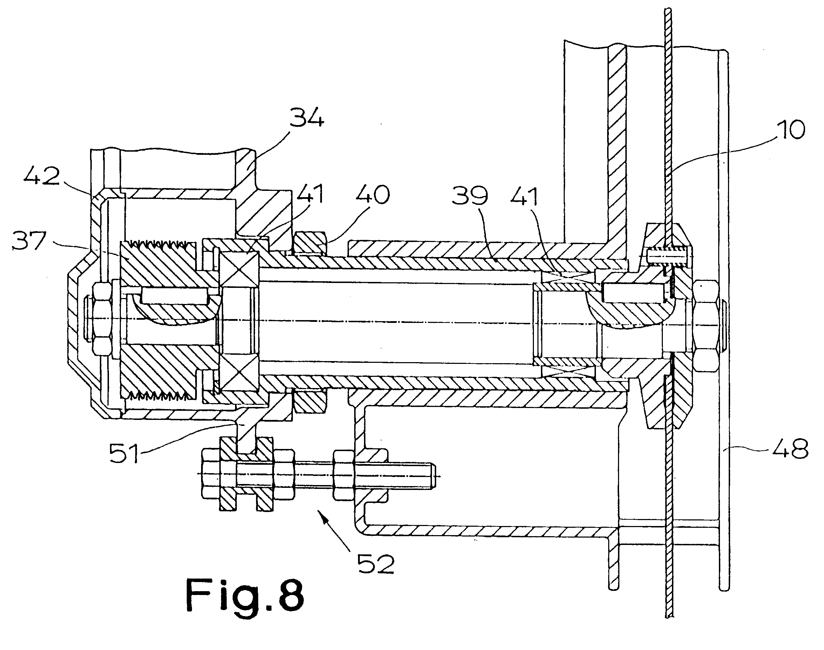

Besonders bevorzugt ist es dabei, daß die Schutzhabe 48 gegenüber dem Kreissägeblatt 10 in Querrichtung zumindest geringfügig verstellbar ist. Das erfolgt im dargestellten und bevorzugten Ausführungsbeispiel durch die in Fig. 8 dargestellte Technik, nämlich dadurch, daß die Querverstellung der Schutzhaube 48 gegenüber dem Kreissägeblatt 10 mittels einer an einer Bogenkulisse 51 des Tragrahmens 34 gleitend angreifenden Verstellverbindung 52 erfolgt. Bei dem dargestellten Ausführungsbeispiel mit dem der Schutzhaube 48 zugeordneten Spaltkeil 49 erfordert die Positionstreue des Spaltkeils 49, gegebenenfalls mit hier nicht dargestellter Schutz- und Absaughaube die Parallelogrammverstellung mittels des Parallellenkers 50, der in Fig. 5 gut zu erkennen ist, aber auch in Fig. 6 mit seinem Angriffspunkt an der Schutzhaube 48 erkennbar ist. Deshalb bedarf es zur exakten Ausrichtung des Spaltkeils 49 gegenüber dem Kreissägeblatt 10, wiederum ein Charakteristikum für extrem hohe Präzision, der Seitenverstellbarkeit der Schutzhaube 48, jedenfalls in geringem Maße gegenüber dem Kreissägeblatt 10. Dies ist, wie Fig. 8 darstellt, elegant und perfekt gelungen.

Fig. 3, 4 und 6 machen noch eine weitere Besonderheit deutlich, die der erfindungsgemäßen Tischkreissäge besondere sicherheitstechnische Vorteile verleiht. Es gilt nämlich, daß am Schlitten 15 ganz oben nahe der Tischplatte 4 seitlich des Sägeaggregates 7 in Längsrichtung verlaufende Schutzklappen 54, 55 schwenkbar angelenkt sind, die einen seitlichen Eingriff in das Sägeaggregat 7 verhindern und jeder Seitenneigungsbewegung des Sägeaggregates 7 folgen. Die links liegende Schutzklappe 54 taucht beim Seitenneigen des Sägeaggregates 7 in Fig. 4, 6 nach links nach innen in den Späneauffangkasten 33 ein, verschwindet dann also gewissermaßen. Die in Fig. 3 erkennbare, rechts liegende Schutzklappe 55 hingegen, die auch in Fig. 6 gut erkennbar ist, folgt der Seitenneigung des Sägeaggregates 7 mit dem Antriebsmotor 8 nach links unter Federbelastung, halt also den Bereich rechts immer geschlossen.

Bislang ist noch im Detail nichts über die Neigungsverstellung des Sageaggregats 7 ausgeführt worden. In einer ebenfalls für sich selbständigen Lehre der Erfindung, der besondere Bedeutung zukommt, gilt, daß zur Seitenneigungsverstellung des Sägeaggregates 7 kreisbogenförmige, ggf. zu den Kulissenführungen 14 koaxiale Zahnstangen 56 am Schlitten 15, insbesondere an den Stirnplatten 31, vorgesehen sind und mit beiden Zahnstangen 56 jeweils ein Zahnrad 57 kämmt, daß beide Zahnräder 57 über eine am Sägeaggregat 7, insbesondere im Späneauffangkasten 33 gelagerte Längswelle 58 miteinander und mit einem an einem Ende argeordneten Betätigungsknauf 59 gekuppelt sind. In Fig. 2 sind nur die beiden Zahnräder 57 an den beiden kreisbogenförmigen Zahnstangen 56 in den Stirnplatten 31 angedeutet und man erkennt eine Öffnung in dem Späneauffangkasten 33, die von der Längswelle 58 durchsetzt wird. Diese wiederum erkennt man geschnitten in Fig. 4, den Betätigungsknauf 59 erkennt man in Fig. 3. Mit der Zwangskupplung der Zahnräder 57 über die Längswelle 58 bewegt sich der neigbare Späneauffangkasten 33 mit dem darin befindlichen Sägeaggregat 7 stets völlig verkantungsfrei bei der Neigungsbewegung.

Im einzelnen nicht dargestellt bzw. in Fig. 5 nur angedeutet ist, daß zwischen dem Betätigungsknauf 59 und der Längswelle 58 ein selbsthemmendes Getriebe 60 angeordnet ist. Weiterhin gilt, daß das Getriebe eine gleichzeitig eine Anzeigevorrichtung 61 für den Neigungswinkel bildende Gehäusekappe 62 aufweist. All dies erkennt man in Fig. 3 besonders gut, an der Gehäusekappe 62 ist als Anzeigevorrichtung 61 eine Nase ausgebildet, die über eine kreisbogenförmige Gradskala 63 direkt oberhalb der kreisbogenförmigen Zahnstange 56 läuft. Oberhalb der Zahnstange 56 erkennt man die zugehörige, koaxiale Kulissenführung 14 mit daran angeordnetem Feststellknebel 65 und den üblichen Schwenklagerelementen 66, die auch an entsprechenden Stellen im Stand der Technik realisiert sind.

Mittels des selbsthemmenden Getriebes 60 läßt sich die Neigung des Sägeaggregates 7 nicht nur exakt einstellen, sondern es besteht auch nicht die Gefahr, daß der eingestellte Wert sich unter dem Eigengewicht des Sägeaggregates 7 wieder verändert. Der Feststellknebel 65 dient dabei lediglich der dauerhaften Feststellung als zusätzliche Sicherheit. Die Selbsthemmung des Getriebes 60 kann durch entsprechende Größen der miteinander kämmenden Zahnräder erreicht werden.

Fig. 3 zeigt rechts unten in einem Ausschnitt noch eine besondere konstruktive Lösung beim Außengehäuse 1 mit den Seitenwangen 5 und den Querstangen 6. Die Querstangen 6 sind hier zunächst durch Zuganker 67 fest mit den Seitenwangen 5 verspannt. Das würde aber eine Verwindung des ansonsten nur über die Tischplatte 4 versteiften Außengehäuse 1 nicht ausschließen. Eine verblüffend einfache Maßnahme ist hier dadurch getroffen, daß die Querstangen 6 endseitig mit Außenverzahnungen versehen und in den Seitenwangen 5 in Steckfassungen 68 mit Innenverzahnungen gehalten sind. Diese Maßnahme hat generell für alle Außengehäuse 1 von Tischkreissägen und anderen Werkzeugmaschinen Bedeutung, ist also nicht auf eine erfindungsgemäße Tischkreissäge beschränkt.

## Patentansprüche

1. Tischkreissäge mit einem Außengehäuse (1) mit einer eine Werkstückauflagefläche (3) bildenden Tischplatte (4), mit einem unter der Tischplatte (4) im Außengehäuse (1) angeordneten Sägeaggregat (7) mit einem Antriebsmotor (8) und einem die Tischplatte (4) von unten her in einem Sägeschlitz (9) durchsetzenden Kreissägeblatt (10), wobei der Sägeschlitz (9) sich im wesentlichen über die volle Länge der Tischplatte (4) erstreckt und damit die Längsrichtung der Tischkreissäge definiert, wobei das Sägeaggregat (7) an in Längsrichtung verlaufenden Führungsschienen (11) mittels Lagerelementen (21) in Längsrichtung verschiebbar ist, wodurch das Kreissägeblatt (10) sich in Längsrichtung im Sägeschlitz (9) bewegt, wobei das Sägeaggregat (7) auch bezüglich einer in Längsrichtung verlaufenden und etwa in der Ebene der Werkstückauflagefläche (3) im Sägeschlitz (9) liegenden Gehrungsschnittachse jedenfalls nach einer Seite hin seitenneigbar ist und wobei das Kreissägeblatt (10) höhenverstellbar ist,
**dadurch gekennzeichnet,**
daß die Führungsschienen (11) am Außengehäuse (1) fest angebracht sind, daß das Sägeaggregat (7) in einem an den Führungsschienen (11) verschiebbaren Schlitten (15) und im Schlitten (15) um die Gehrungsschnittachse seitenneigbar angeordnet ist und daß das Sägeaggregat (7) zur Höhenverstellung des Kreissägeblattes (10) einen Tragrahmen (34) aufweist, der an einem Lagerpunkt (35) im Schlitten (15) um eine in Querrichtung verlaufende Tragachse (36) schwenkbar gelagert ist.

2. Tischkreissäge nach Anspruch 1, dadurch gekennzeichnet, daß die Führungsschienen (11) an der Tischplatte (4) angeordnet sind und der Schlitten (15) hängend angebracht ist und daß, vorzugsweise, die Führungsschiene (11) durch von oben her die Tischplatte (4) durchsetzende Schrauben (16) an der Tischplatte (4) befestigt ist und die Köpfe der Schrauben (16) in der Tischplatte (4) versenkt sind, insbesondere in einer von einer bündig abschließenden Abdeckung (17) abgedeckten Vertiefung (18) in der Tischplatte (4) angeordnet, oder daß, vorzugsweise die Führungsschiene (11) an der Tischplatte (4) integral angeformt ist, wobei hier ggf. die Tischplatte (4) aus einem oder mehreren Extrusionsprofilen, insbesondere aus Aluminium, besteht und die Führungsschiene (11) Teil des Extrusionsprofils ist.

3. Tischkreissäge nach einen, der vorhergehenden Ansprüche, dadurch gekennzeichnet, daß die insbesondere als Lagerrollen ausgeführten Lagerelemente (21) des Schlittens (15) an einer Führungsschiene (11) wirkungsmäßig in allen Richtungen angreifen, jedoch an der anderen Führungsschiene (11) in Querrichtung nicht angreifen.

4. Tischkreissäge nach einem der Ansprüche 1 bis 3, dadurch gekennzeichnet, daß die Gehrungsschnittachse von kreisbogenförmigen Kulissenführungen (14) virtuell definiert ist.

5. Tischkreissäge nach Anspruch 4, dadurch gekennzeichnet, daß der Schlitten (15) aus Stirnplatten (31) und diese verbindenden, die Lagerelemente (21) tragenden Verbindungselementen (32) besteht und daß die Stirnplatten (31) des Schlittens (15) die kreisbogenförmigen Kulissenführungen (14) für die Seitenneigung des Sägeaggregats (7) aufweisen.

6. Tischkreissäge nach einem der vorhergehenden Ansprüche, dadurch gekennzeichnet, daß der Schlitten (15) als unten herum geschlossener Späneauffangkasten ausgeführt ist oder daß in den Schlitten (15) bezüglich der Gehrungsschnittachse neigbar, insbesondere in den Kulissenführungen (14), ein Späneauffangkasten (33) eingehängt und das Sägeaggregat (7) im Späneauffangkasten (33) angeordnet ist.

7. Tischkreissäge nach einem der Ansprüche 1 bis 6, dadurch gekennzeichnet, daß eine - von einem evtl. vorhandenen Zugstab (12) für das Sägeaggregat (7) unabhängige - Verstellspindel (44) o. dgl. am Tragrahmen (34) mit Abstand vom Lagerpunkt (35) angreift und am anderen Ende in einem Spindelwiderlager (45) am Schlitten (15), insbesondere am Späneauffangkasten (33), gelagert ist.

8. Tischkreissäge nach einem der Ansprüche 1 bis 7, dadurch gekennzeichnet, daß die Tragachse (36) des Tragrahmens (34) mit den Achsenden am Schlitten (15), insbesondere Späneauffangkasten (33), befestigt/gelagert ist und daß die Tragachse (36) mit dem Tragrahmen (34) bzw. der Tragrahmen (34) auf der Tragachse (36) in Achsrichtung - Querrichtung - zumindest geringfügig verstellbar ist.

9. Tischkreissäge nach einem der Ansprüche 1 bis 8, dadurch gekennzeichnet, daß die Tragachse (36) gegenüber der Querrichtung geringfügig winkelverstellbar ist, daß dazu, vorzugsweise, ein Achsende quer zur Achsrichtung verstellbar ist und daß dazu, wiederum vorzugsweise, eine exzentrisch verstellbare Lagerung vorgesehen ist.

10. Tischkreissäge nach einem der Ansprüche 1 bis 9, dadurch gekennzeichnet, daß dem Kreissägeblatt (10) eine untere Schutzhaube (48) und ein daran angebrachter Spaltkeil (49) zugeordnet ist und daß die Schutzhaube (48) einerseits am Tragrahmen (34) um die Antriebswelle des Kreissägeblattes (10) drehgelagert, andererseits über einen Parallellenker (50) mit dem Schlitten (15), insbesondere dem Späneauffangkasten (33) verbunden ist und daß, vorzugsweise, die Schutzhaube (48) gegenüber dem Kreissägeblatt (10) in Querrichtung zumindest geringfügig verstellbar ist, wobei ggf. die Querverstellung der Schutzhaube (48) gegenüber dem Kreissägeblatt (10) mittels einer an einer Bogenkulisse (51) des Tragrahmens (34) gleitend angreifenden Verstellverbindung (52) erfolgt.

11. Tischkreissäge nach einem der vorhergehenden Ansprüche, dadurch gekennzeichnet, daß am Schlitten (15) ganz oben nahe der Tischplatte (4) seitlich des Sägeaggregates (7) in Längsrichtung verlaufende Schutzklappen (54, 55) schwenkbar angelenkt sind, die einen seitlichen Eingriff in das Sägeaggregat (7) verhindern und jeder Seitenneigungsbewegung des Sägeaggregates (7) folgen.

12. Tischkreissäge nach einem der Ansprüche 1 bis 11 mit einem Außengehäuse (1), das als die Verwindungssteifigkeit gewährleistende Strukturelemente neben einer Tischplatte (4) zwei plattenartige Seitenwangen (5) und mindestens zwei die Seitenwangen (5) unten verbindende Querstangen (6) aufweist, dadurch gekennzeichnet, daß die Querstangen (6) endseitig mit Außenverzahnungen versehen und in den Seitenwangen (5) in Steckfassungen (68) mit Innenverzahnungen gehalten sind.

## Claims

1. A table circular saw having an external housing (1) comprising a table top (4) which forms a workpiece support face (3), having a sawing unit (7) which comprises a drive motor (8) and which is disposed under the table top (4) in the external housing (1), and having a circular saw blade (10) which passes through the table top (4) from below in a sawing slit (9), wherein the sawing slit (9) extends substantially over the entire length of the table top (4) and thus defines the longitudinal direction of the table circular saw, wherein the sawing unit (7) is displaceable in the longitudinal direction, by means of bearing elements (21), on guide rails (11) which run in the longitudinal direction, whereby the circular saw blade (10) moves in the longitudinal direction in the sawing slit (9), wherein the sawing unit (7) can also be tilted laterally to one side with respect to a mitre cut axis which runs in the longitudinal direction and is situated in the sawing slit (9) approximately in the plane of the workpiece support face (3), and wherein the circular saw bade (10) is height-adjustable,
**characterised in that**
the guide rails (11) are fixedly mounted on the external housing (1), that the sawing unit (7) is disposed in a cradle (15) which is displaceable on the guide rails (11) and can be tilted laterally in the cradle (15) about the mitre cut axis, and that the sawing unit (7) has a supporting frame (34) for the height adjustment of the circular saw blade (10), which supporting frame is mounted on a bearing point (35) in the cradle (15) so that it can swivel about a supporting pivot (36) running in a transverse direction.

2. A table circular saw according to claim 1, characterised in that the guide rails (11) are disposed on the table top (4) and the cradle (15) is mounted suspended, and that the guide rail (11) is preferably fixed to the table top (4) by screws (16) passing through the table top (4) from above and the heads of the screws (16) are countersunk in the table top (4), particularly in a recess (18) in the table top (4) which is covered by a cover (17) which terminates flush therewith, or preferably that the guide rail (11) is integrally formed on the table top (4), wherein the table top (4) here optionally consists of one or more extruded sections, made of aluminium in particular, and the guide rail (11) is part of the extruded section.

3. A table circular saw according to either one of the preceding claims, characterised in that the bearing elements (21) of the cradle (15), which in particular are constructed as bearing rollers, effectively act on one guide rail (11) in all directions but do not act on the other guide rail (11) in the transverse direction.

4. A table circular saw according to any one of claims 1 to 3, characterised in that the mitre cut axis is defined as a virtual axis by circularly arcuate gate guides (14).

5. A table circular saw according to claim 4, characterised in that the cradle (15) consists of end plates (31) and of connecting elements (32) which connect the latter and carry the bearing elements (21), and that the end plates (31) of the cradle (15) comprise the circularly arcuate gate guides (14) for the lateral tilting of the sawing unit (7).

6. A table circular saw according to any one of the preceding claims, characterised in that the cradle (15) is designed as a swarf catchment box which is closed all round at the bottom, or that a swarf catchment box (33) is suspended in the cradle (15), particularly in the gate guides (14), so that it can be tilted with respect to the mitre cut axis, and the sawing unit (7) is disposed in the swarf catchment box (33).

7. A table circular saw according to any one of claims 1 to 6, characterised in that an adjusting spindle (44) or the like - which is independent of a pull rod (12) for the sawing unit (7) which may possibly be present - acts on the supporting frame (34) at a distance from the bearing point (35) and is mounted at its other end in a spindle abutment (45) on the cradle (15), particularly on the swarf catchment box (33).

8. A table circular saw according to any one of claims 1 to 7, characterised in that the supporting pivot (36) of the supporting frame (34) is fixed/mounted at its pivot ends on the cradle (15), particularly on the swarf catchment box (33), and that the supporting pivot (36), with the supporting frame (34) or supporting frames (34) on the supporting pivot (36), is at least slightly adjustable axially - in the transverse direction.

9. A table circular saw according to any one of claims 1 to 8, characterised in that the supporting pivot (36) is slightly angularly adjustable in relation to the transverse direction, and that one pivot end is preferably adjustable transversely to the axial direction for this purpose, and that an eccentrically adjustable bearing is in turn preferably provided for this purpose.

10. A table circular saw according to any one of claims 1 to 9, characterised in that a lower protective hood (48) and a gap gusset (49) mounted thereon are associated with the circular saw blade (10), and that the protective hood (48) is firstly mounted on the supporting frame (34) so that it can rotate about the drive shaft of the circular saw blade (10) and is secondly joined to the cradle (15), particularly to the swarf catchment box (33), via a parallel guide rod (50), and that the protective hood (48) is preferably at least slightly adjustable in a transverse direction in relation to the circular saw blade (10), wherein the transverse adjustment of the protective hood (48) in relation to the circular saw blade (10) is optionally effected by means of an adjusting connection (52) which acts in a sliding manner on an arcuate gate guide (51) of the supporting frame (34).

11. A table circular saw according to any one of the preceding claims, characterised in that guard flaps (54, 55), which run in the longitudinal direction, just above and near the table top (4) and at the side of the sawing unit (7), are coupled to the cradle (15) so that they can swivel, which guard flaps prevent lateral intervention in the sawing unit (7) and follow each lateral tilting movement of the sawing unit (7).

12. A table circular saw according to any one of claims 1 to 11, having an external housing (1) which comprises, as structural elements apart from a table top (4) which ensure torsional rigidity, two plate-like side cheeks (5) and at least two transverse rods (6) connecting the side cheeks (5) at the bottom, characterised in that the transverse rods (6) are provided at their ends with external denticulations and are held by internal denticulations in insertion sockets (68) in the side cheeks (5).

## Revendications

1. Scie circulaire à table de menuisier comprenant un boîtier externe (1) muni d'un dessus de table (4) formant une surface d'appui (3) pour une pièce à usiner, un agrégat de scie (7) disposé dans le boîtier externe (1) en dessous du dessus de table (4), muni d'un moteur d'entraînement (8) et d'une lame de scie circulaire (10) traversant le dessus de table (4) à partir du bas dans une voie de scie (9), dans laquelle la voie de scie (9) s'étend essentiellement sur toute la longueur du dessus de table (4) et définit ainsi la direction longitudinale de la scie circulaire à table de menuisier, dans laquelle l'agrégat de scie (7) est à même de se déplacer en direction longitudinale au moyen d'éléments de paliers (21) dans des rails de guidage (11) s'étendant en direction longitudinale si bien que la lame de scie circulaire (10) se déplace en direction longitudinale dans la voie de scie (9), dans laquelle l'agrégat de scie (7) est également capable de s'incliner latéralement en tout cas d'un côté par rapport à un axe de coupe d'onglet s'étendant en direction longitudinale et disposé dans la voie de scie (9) approximativement dans le plan de la surface d'appui (3) pour une pièce à usiner, et dans laquelle la lame de scie circulaire (10) est réglable en hauteur,
caractérisée en ce que
les rails de guidage (11) sont appliqués à demeure sur le boîtier externe (1), en ce que l'agrégat de scie (7) est disposé dans un coulisseau (15) apte à se déplacer le long des rails de guidage (11) et de façon à pouvoir s'incliner latéralement dans le coulisseau (15) autour de l'axe de coupe d'onglet, et en ce que l'agrégat de scie (7) présente, pour le réglage en hauteur de la lame de scie circulaire (10), un cadre de support (34) qui est monté sur un point d'appui (35) dans le coulisseau (15) en pivotement autour d'un axe de support (36) s'étendant en direction transversale.

2. Scie circulaire à table de menuisier selon la revendication 1, caractérisée en ce que les rails de guidage (11) sont disposés sur le dessus de table (4) et le coulisseau (15) est disposé en suspension et en ce que, de préférence, le rail de guidage (11) est fixé au dessus de table (4) à l'aide de vis (16) traversant le dessus de table (4) à partir du haut, les têtes des vis (16) étant noyées dans le dessus de table (4), en particulier dans un évidement (18) disposé dans le dessus de table (4), recouvert par un recouvrement (17) procurant une fermeture à surface plane, ou bien en ce que, de préférence, le rail de guidage (11) est façonné de manière solidaire au dessus de table (4), dans laquelle, en l'occurrence, le cas échéant, le dessus de table (4) est constitué par un ou plusieurs profilés obtenus par extrusion, en particulier en aluminium, et le rail de guidage (11) représente une partie du profilé obtenu par extrusion.

3. Scie circulaire à table de menuisier selon l'une quelconque des revendications précédentes, caractérisée en ce que les éléments de paliers (21) du coulisseau (15) réalisés en particulier sous forme de rouleaux de paliers, agissent de manière efficace sur un rail de guidage (11) dans toutes les directions mais n'agissent pas en direction transversale sur l'autre rail de guidage (11).

4. Scie circulaire à table de menuisier selon l'une quelconque des revendications 1 à 3, caractérisée en ce que l'axe de coupe d'onglet est défini de manière virtuelle par des guides de coulisses (14) en forme d'arcs de cercles.

5. Scie circulaire à table de menuisier selon la revendication 4, caractérisée en ce que le coulisseau (15) est constitué par des plaques frontales (31) et par des éléments de liaison (32) reliant ces dernières et portant les éléments de paliers (21), et en ce que les plaques frontales (31) du coulisseau (15) présentent les guides de coulisses (14) en forme d'arcs de cercles pour l'inclinaison latérale de l'agrégat de scie (7).

6. Scie circulaire à table de menuisier selon l'une quelconque des revendications précédentes, caractérisée en ce que le coulisseau (15) est réalisé sous forme d'une boîte de récupération de copeaux fermée dans sa partie inférieure ou en ce que, dans le coulisseau (15), est suspendue une boîte de récupération de copeaux (33) apte à s'incliner par rapport à l'axe de coupe d'onglet, en particulier dans les guides de coulisses (14), et l'agrégat de scie (7) est disposé dans la boîte de récupération de copeaux (33).

7. Scie circulaire à table de menuisier selon l'une quelconque des revendications 1 à 6, caractérisée en ce qu'une tige de réglage (44) ou analogues - indépendante d'une barre de traction (12) éventuellement présente destinée à l'agrégat de scie (7) - agit sur le cadre de support (34) à une certaine distance du point d'appui (35) et est montée à son autre extrémité dans une butée de tige (45) sur le coulisseau (15), en particulier sur la boîte de récupération de copeaux (33).

8. Scie circulaire à table de menuisier selon l'une quelconque des revendications 1 à 7, caractérisée en ce que l'axe de support (36) du cadre de support (34) est fixé/monté avec ses extrémités d'axe sur le coulisseau (15) en particulier sur la boîte de récupération de copeaux (33) et en ce que l'axe de support (36) avec le cadre de support (34), respectivement le cadre de support (34) sur l'axe de support (36) peut être réglé au moins de manière minime en direction axiale - en direction transversale -.

9. Scie circulaire à table de menuisier selon l'une quelconque des revendications 1 à 8, caractérisée en ce que l'axe de support (36) peut être réglé angulairement de manière minime par rapport à la direction transversale, en ce que, en outre, de préférence, une extrémité d'axe est réglable en direction transversale par rapport à la direction axiale et en ce que, en outre, une nouvelle fois de préférence, on prévoit un palier apte à un réglage excentrique.

10. Scie circulaire à table de menuisier selon l'une quelconque des revendications 1 à 9, caractérisée en ce qu'un capot de protection inférieur (48) et un coin à refendre (49) appliqué sur ce dernier sont attribués à la lame de scie circulaire (10) et en ce que le capot de protection (48), d'une part est monté en rotation sur le cadre de support (34) autour de l'arbre d'entraînement de la lame de scie circulaire (10), d'autre part est relié via une bielle à mouvement parallèle (50) au coulisseau (15) en particulier à la boîte de récupération de copeaux (33), et en ce que, de préférence, le capot de protection (48) peut être réglé au moins de manière minime en direction transversale par rapport à la lame de scie circulaire (10), dans laquelle éventuellement le réglage transversal du capot de protection (48) par rapport à la lame de scie circulaire (10) a lieu au moyen d'une liaison réglable (52) agissant par glissement sur une coulisse arquée (51) du cadre de support (34).

11. Scie circulaire à table de menuisier selon l'une quelconque des revendications précédentes, caractérisée en ce que des clapets de protection (54, 55) s'étendant en direction longitudinale sont articulés en pivotement au coulisseau (15) tout en haut à proximité du dessus de table (4) en position latérale par rapport à l'agrégat de scie (7), lesdits capots empêchant une pénétration latérale dans l'agrégat de scie (7) et suivant chaque mouvement d'inclinaison latérale de l'agrégat de scie (7).

12. Scie circulaire à table de menuisier selon l'une quelconque des revendications 1 à 11, comprenant un boîtier externe (1) qui présente, à titre d'éléments de structures garantissant la rigidité en torsion, outre un dessus de table (4), deux joues latérales (5) en forme de plaque et au moins deux barres transversales (6) reliant dans leur partie inférieure les joues latérales (5), caractérisée en ce que les barres transversales (6) sont munies à leurs extrémités de dentures externes et sont maintenues dans les joues latérales (5) dans des douilles d'enfichage (68) munies de dentures internes.
